# EUROPEAN PATENT APPLICATION

(11) **EP 1 215 195 A1**
(43) Date of publication of application: **19.06.2002**
(21) Application number: 01127418.0
(22) Date of filing: 26.11.2001
(51) Int. Cl.: C07C 69/76, C07D 307/00, C09K 19/20, C09K 19/30, C09K 19/34

(54) **Banana-shaped polymerizable mesogenic compounds**

(30) Priority: 12.12.2000 EP 00126559
(71) Applicant: MERCK PATENT GmbH, 64293 Darmstadt (DE)
(72) Inventor: Goulding, Mark, Dr., Poole, Dorset BH14 8TP (GB)

(57) **Abstract**

The invention relates to banana-shaped polymerizable mesogenic compounds of formula I

P-(Sp-X)ₙ-M¹-Y¹-B-Y²-M²-R I

wherein P, Sp, X, n, M¹, M², Y¹, Y², B and R have the meaning of claim 1, to polymerizable compositions comprising them, to polymers obtained from the inventive compounds and compositions and to the use of the inventive compounds, compositions and polymers in liquid crystal displays, optical films, cosmetics, diagnostics, liquid crystal pigments, security applications, nonlinear optics, optical information storage or as chiral dopants.

## Description

### Object of the Invention

The invention relates to banana-shaped polymerizable mesogenic compounds, to polymerizable compositions comprising them, to polymers obtained from the inventive compounds and compositions and to the use of the inventive compounds, compositions and polymers in liquid crystal displays, especially ferroelectric and flexoelectric devices, optical films, cosmetics, diagnostics, liquid crystal pigments, security applications, nonlinear optics, optical information storage or as chiral dopants.

### Background and Prior Art

Banana-shaped or bent-shaped liquid crystal (LC) compounds are known in prior art. For example, G. Pelzl, S. Diele and W. Weissflog Adv. Mater. 1999, 11(9), 707-724 give a review over different types of low molar mass liquid crystal materials with banana-shaped molecular structure and their applications.

Banana-shaped LC molecules of prior art contain a central structure unit, like for example a 1,3-phenylene group, that is linked non-linearly, at an angle of typically about 120°, to its neighboured groups, thus imparting a bent or banana-shaped structure to the molecule. A typical example is the following compound, 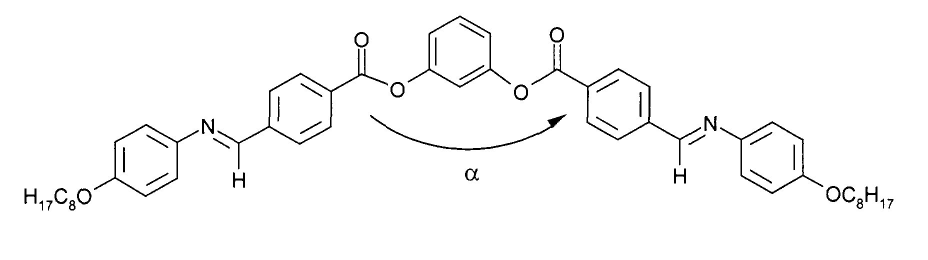 which is disclosed in the above mentioned review by Pelzl, Diele, Weissflog et al, and is reported to exhibit a molecular bending angle α of 122° obtained by NMR measurements in the mesophase.

Banana-shaped LC compounds have been suggested for various kinds of applications. For example, they are reported to show special molecular packing to give smectic layers with ferroelectric, ferrielectric or antiferroelectric properties, and were suggested for ferroelectric or antiferroelectric switchable devices with very fast switching times. Also, banana shaped molecules are reported to induce chirality in smectic layers, although the molecules as such are achiral.

Furthermore, D.S. Hermann et al., Freiburger Arbeitstagung Flussigkristalle 1998, p. 57 report that banana-shaped LC compounds can induce flexoelectric polarization in a nematic medium. The flexoelectric effect is described inter alia by Chandrasekhar, "Liquid Crystals", 2^{nd} edition, Cambrige University Press (1992) and P.G. deGennes et al., "The Physics of Liquid Crystals", 2^{nd} edition, Oxford Science Publications (1995). R.B.Meyer and J.S.Patel in Phys.Rev. Lett. 58 (15), 1538 (1987) postulate that chiral nematic materials with a flexoelectric effect should exhibit fast electro-optic switching, which would make them interesting materials for LC crystal displays and optical switches. Further work in this field is described e.g. by P. Rudquist et al., Liq. Cryst. **23** (4), 503 (1997).

For use in commercial applications, banana-shaped LC materials should exhibit high chemical and thermal stability and high electric resistivity. Furthermore, many applications require anisotropic materials having a molecular structure that is permanently fixed and showing high thermal and mechanical stability and low temperature dependence of the optical properties.

It was an aim of the invention to provide banana-shaped liquid crystal or mesogenic materials that show the advantageous properties mentioend above and are suitable for ferroelectric and flexoelectric devices, for polymerized anisotropic materials and for optical films.

The inventors have found out that the above aims can be achieved by providing banana-shaped polymerizable mesogenic compounds and polymers according to the present invention. Apart from the use in switchable devices, the inventive compounds as well as mixtures thereof are also suitable for other types of displays and other optical and electrooptical applications, such as optical compensation or polarizing films, colour filters and optical information storage.

WO 93/22397 discloses a polymerizable compound with a 1,3-phenylene group which has, however, no mesophase.

The term mesogenic compound as used in the foregoing and the following comprises compounds with a banana-shaped, rod-shaped, lath-shaped or disk-shaped mesogenic group, i.e. a group with the ability to induce mesophase behaviour in a compound comprising said group. These compounds do not necessarily have to exhibit a liquid crystalline phase themselves. Sometimes these compounds show mesophase behaviour only in mixtures with other compounds or, in case of polymerizable compounds, when the compounds or mixtures are polymerized.

### Summary of the Invention

One object of the invention is a banana-shaped polymerizable mesogenic compound of formula I

P-(Sp-X)ₙ-M¹-Y¹-B-Y²-M²-R I

wherein
- P: is a polymerizable group,
- Sp: is a spacer group,
- X, Y¹ and Y²: are in each case independently -O-, -S-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- or a single bond,
- R⁰: is H or alkyl with 1 to 4 C atoms,
- n: is 0 or 1,
- M¹ and M²: are independently of each other a mesogenic group,
- B: is a bivalent ring group that imparts a bent structure to the compound,
- R: is H, F, Cl, CN, OCN, SCN, SF₅, NO₂ or a straight-chain or branched alkyl radical with up to 25 C atoms which may be unsubstituted, mono- or polysubstituted by halogen or CN, it being also possible for one or more non-adjacent CH₂ groups to be replaced, in each case independently from one another, by -O-, -S-, -NH-, -N(CH₃)-, -CO-, -COO-, -OCO-, -OCO-O-, -S-CO-, -CO-S-, -CH=CH- or -C≡C- in such a manner that oxygen atoms are not linked directly to one another, or alternatively R is denoting P-(Sp-X)ₙ-, with P, Sp, X and n having independently of each other one of the meanings given above,
with the proviso that if B is 1,3-phenylene, Y¹ is -COO-, Y² is -OCO-, R is P-(Sp-X)ₙ-, P is acrylate, n is 1, Sp is hexylene and X is -O-, M¹ and M² are not at the same time unsubstituted 1,4-phenylene.

Another object of the invention are polymerizable mixtures comprising at least one compound of formula I.

Another object of the invention are anisotropic polymers obtained by polymerizing the compounds of formula I or the polymerizable compositions according to the invention.

Another object of the invention is the use of the compounds of formula I, the compositions or polymer according to the invention in liquid crystal displays, such as STN, TN, AMD-TN, temperature compensation, ferroelectric, antiferroelectric, flexoelectric, guest-host, phase change or surface stabilized or polymer stabilized cholesteric texture (SSCT, PSCT) displays, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants

### Detailed Description of the Invention

The bivalent ring group B in formula I is selected to impart to the inventive compound a bent or banana-shaped structure with a molecular bending angle α as described above. The bending angle α imparted to the inventive compounds of formula I by the bivalent ring group B is preferably 90 to 165 °, in particular 105 to 150 °, very preferably 115 to 135 °, most preferably 120 to 130 °.

B is preferably a mono- or bicyclic aromatic group that may also contain up to three hetero atoms, and is for example selected from the following groups 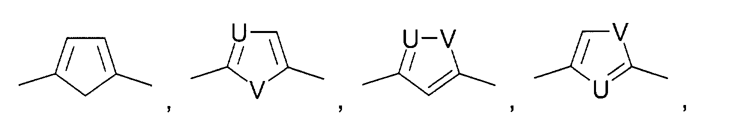 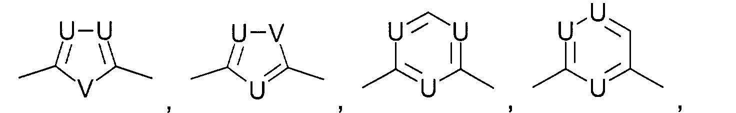 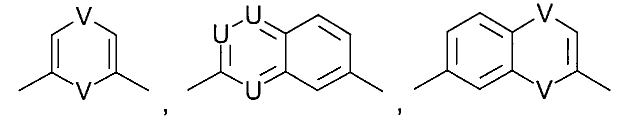 and 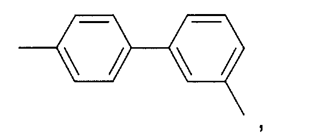 wherein
- U: is CR' or N,
- V: is CR'₂, NR', O or S,
- R': is H or alkyl with 1 to 7 C atoms,
and the monocyclic five-membered groups can be substituted with 1, 2 or 3, the monocyclic six-membered groups with 1, 2, 3 or 4 and the bicyclic groups with 1, 2, 3, 4, 5 or 6 groups L, with L being in each case independently F, Cl, CN, SCN, NO₂, SF₅, alkyl, alkoxy, alkylcarbonyl or alkoxycarbonyl having 1 to 7 C atoms wherein one or more H atoms may be substituted by F or Cl.

Preferably B is selected from the following groups 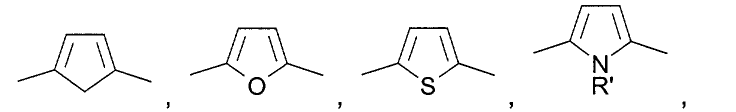 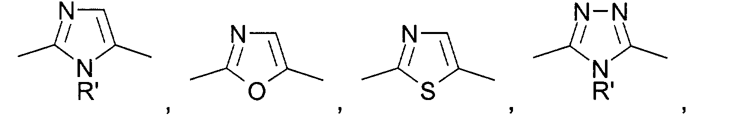 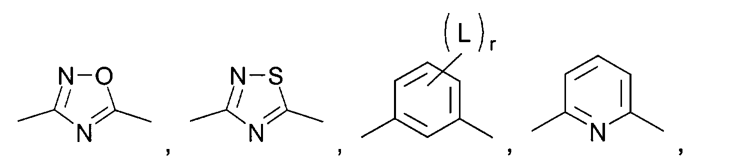 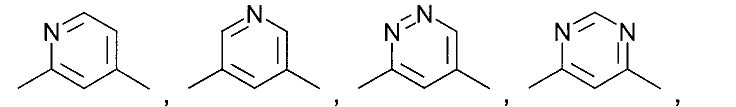 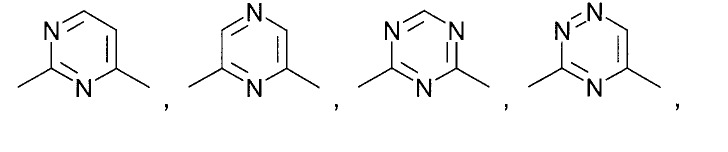 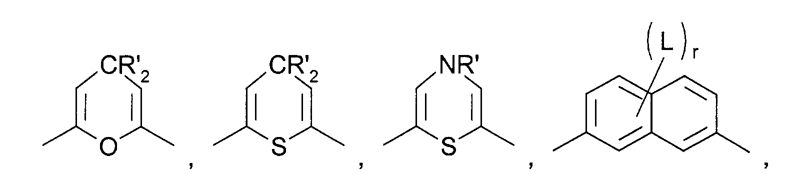 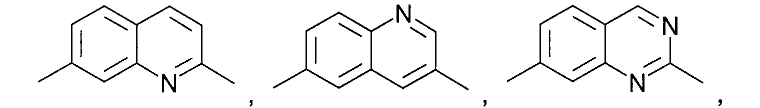 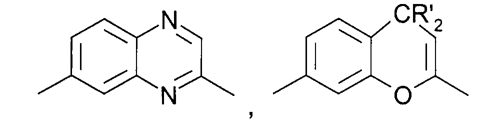 and 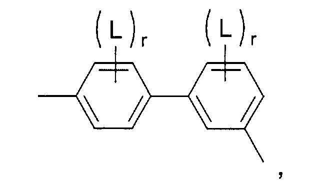 wherein R' and L have one of the meanings given above and r is 0,1, 2 or 3. Preferably at least one of R' denotes H.

Very preferably B is 1,3-phenylene that is optionally substituted with L in the 4-, 5- and/or 6-position, in particular 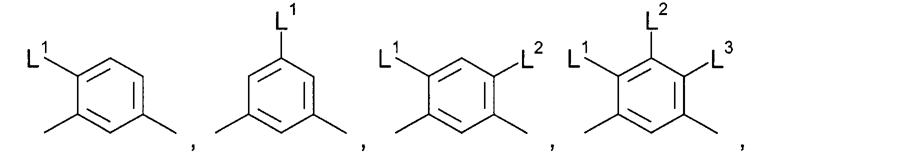 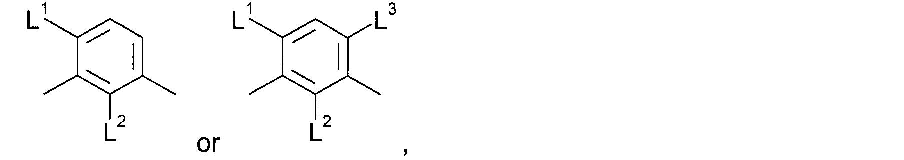 with L¹, L² and L³ preferably selected from F, Cl, CN, OH, NO₂, CH₃, C₂H₅, OCH₃, OC₂H₅, COCH₃, COC₂H₅, COOCH₃, COOC₂H₅, CF₃, OCF₃, OCHF₂, OC₂F₅, in particular F, Cl, CN, CH₃, C₂H₅, OCH₃, COCH₃, CF₃ and OCF₃, most preferably F, Cl, CN, CH₃, OCH₃ and OCF₃.

M¹ in formula I is preferably selected of formula II1

-A¹-(Z-A²)ₘ₁- II1

wherein
- Z: is in each case independently -O-, -S-, -CO-, -COO-, -OCO-, -O-COO-, -CO-NR⁰-, -NR°-CO-, -OCH₂-, -CH₂O-, -SCH₂-, -CH₂S-, -CH₂CH₂-, -CH=CH-, -C≡C-, -CH=CH-COO-, -OCO-CH=CH- or a single bond,
- A¹ and A²: are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo(2,2,2)octylene, piperidine-1,4-diyl, naphthalene-2,6-diyl, decahydronaphthalene-2,6-diyl, or 1,2,3,4-tetrahydronaphthalene-2,6-diyl, it being possible for all these groups to be unsubstituted, mono- or polysubstituted with F, Cl, SCN, CN, NO₂, SF₅ or optionally fluorinated alkyl, alkoxy, alkylcarbonyl or alkoxycarbonyl with 1 to 7 C atoms,
- R⁰: has the meaning of formula I, and
- m1: is 0, 1, 2 or 3.

M² in formula I is preferably selected of formula 112

-A¹-(Z-A²)ₘ₂- II2

wherein A¹, Z and A² have one of the meanings of formula II1 and m2 is 0, 1, 2 or 3.

Preferred compounds of formula I are those wherein m1 and m2 are independently of each other 1, 2 or 3. Further preferred are compounds wherein the mesogenic groups M¹ and M² comprise two or three five- or six-membered rings. Especially preferred are compounds wherein one of m1 and m2 is 2 or 3 and the other is 1, 2 or 3, very preferably both m1 and m2 are 2 or 3, in particular 2. Further preferred are compounds wherein m1+m2 is 3, 4, 5 or 6.

Another preferred embodiment relates to compounds wherein at least one radical Z in fomruila II1 and/or 112 denotes -C≡C-. These compounds are especially suitable for uses where highly birefringent materials are needed.

A smaller group of preferred mesogenic groups M¹ and M² is listed below. For reasons of simplicity, Phe in these groups is 1,4-phenylene that may also be substituted by 1 to 4 groups L, with L being F, Cl, CN, SCN, NO₂, SF₅ or an alkyl, alkoxy, alkylcarbonyl or alkoxycarbonyl group having 1 to 7 C atoms wherein one or more H atoms may be substituted by F or Cl, and Cyc is 1,4-cyclohexylene. Z has one of the meanings of formula II. The list is comprising the following subformulae as well as their mirror images

-Phe- II-1

-Cyc- II-2

-Phe-Z-Phe- II-3

-Phe-Z-Cyc- II-4

-Cyc-Z-Cyc- II-5

-Phe-Z-Phe-Z-Phe- II-6

-Phe-Z-Phe-Z-Cyc- II-7

-Phe-Z-Cyc-Z-Phe- II-8

-Cyc-Z-Phe-Z-Cyc- II-9

-Phe-Z-Cyc-Z-Cyc- II-10

-Cyc-Z-Cyc-Z-Cyc- II-11

Particularly preferred are the subformulae II-3, II-4, II-5, II-7 and 11-10.

Z is preferably -COO-, -OCO-, -CH₂CH₂-, -C≡C- or a single bond.

Very preferably M¹ and M² are selected from the following formulae and their mirror images 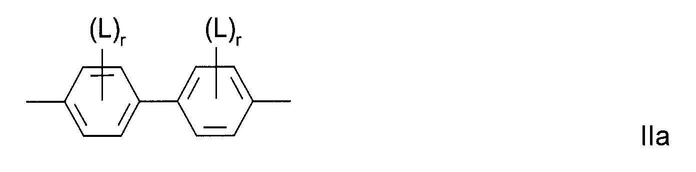 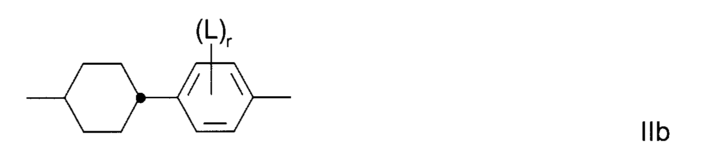 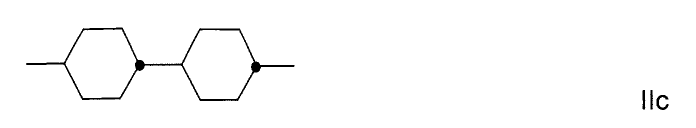 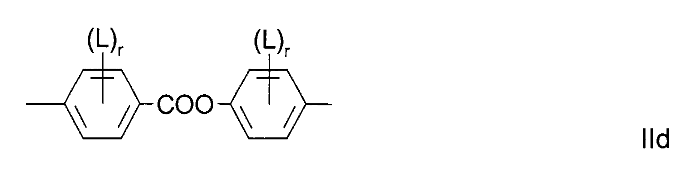 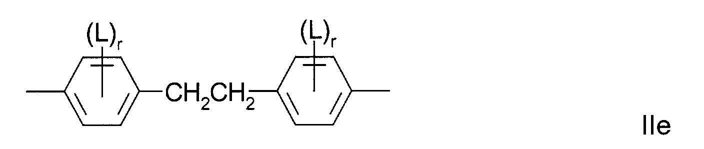 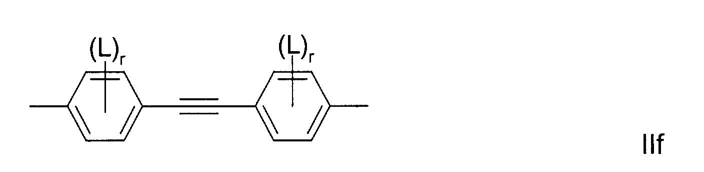 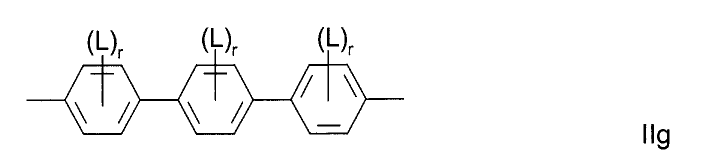 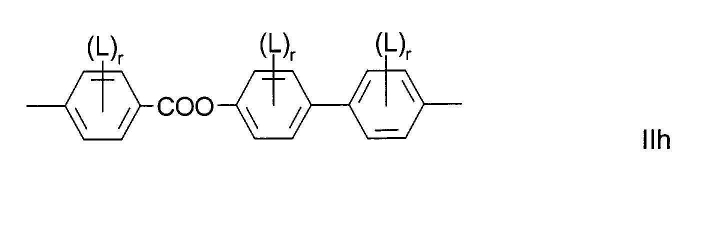 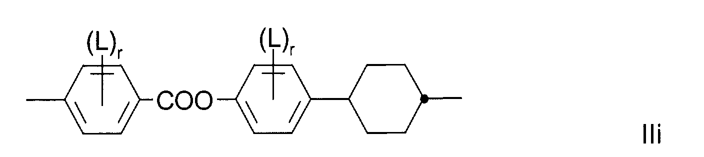 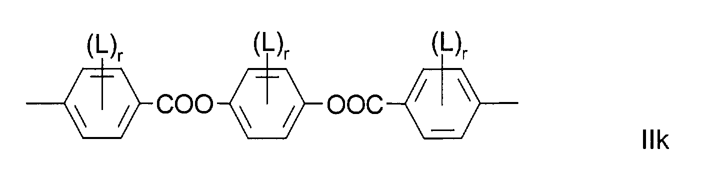 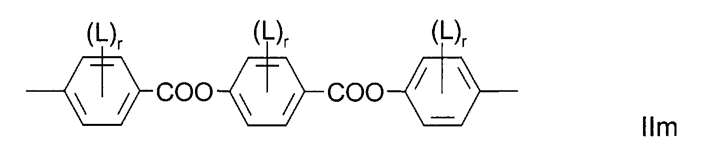 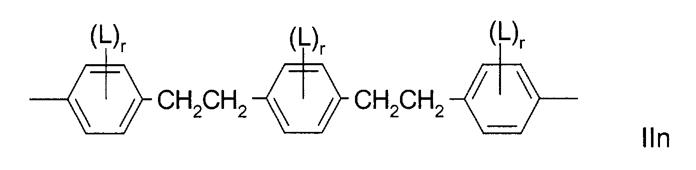 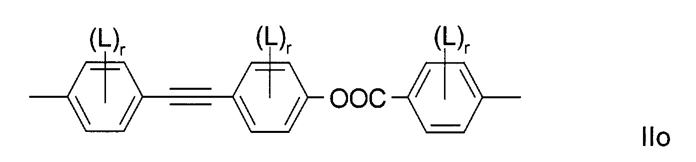 wherein L has the meaning given above and r is 0, 1 or 2. 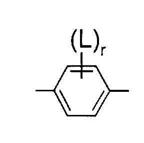 in these formulae is preferably 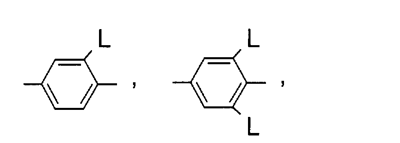 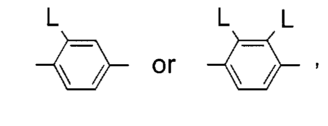 with L having one of the above meanings.

Very preferred are subformulae IId, IIg, IIh, IIi, IIk and IIo, in particular IId and Ilk.

L is preferably F, Cl, CN, OH, NO₂, CH₃, C₂H₅, OCH₃, OC₂H₅, COCH₃, COC₂H₅, COOCH₃, COOC₂H₅, CF₃, OCF₃, OCHF₂, OC₂F₅, in particular F, Cl, CN, CH₃, C₂H₅, OCH₃, COCH₃, CF₃ and OCF₃, most preferably F, Cl, CH₃, OCH₃ and OCF₃.

In another preferred embodiment invention the polymerizable mixture comprises at least one chiral polymerizable compound of formula I comprising a mesogenic group having at least one center of chirality.

In these compounds M¹ and/or M² are preferably selected according to the following formulae

-(A¹-Z)ₐ-G¹- II*-1

-(A¹-Z)ₐ-G²-(Z-A²)_{b}- II*-2

wherein
A¹, A² and Z have the meaning given in formula II,
a and b are independently of each other 0, 1 or 2,
G¹ together with R in formula I forms a terminal chiral group, and
G² is a bivalent chiral group.

Preferred chiral groups G¹-R are for example cholesteryl, terpenoid radicals as disclosed e.g. in WO 96/17901, preferably selected from menthyl, neomenthyl, campheyl, pineyl, terpineyl, isolongifolyl, fenchyl, carreyl, myrthenyl, nopyl, geraniyl, linaloyl, neryl, citronellyl and dihydrocitronellyl, in particular menthyl or menthone derivatives or terminal chiral sugar derivatives comprising a mono- or bicyclic radical with pyranose or furanose rings like, for example, a group derived from the chiral sugars disclosed in WO 95/16007.

Preferred chiral groups G² are for example cholesteryl or groups derived from sugars, binaphthyl derivatives, or optically active glycols, especially ethane-1,2-diol substituted in 1- and or 2-position with alkyl or aryl groups. In case of sugar groups, these are preferably selected from mono- and dicyclic groups comprising pentose or hexose rings.

Particularly preferred are the following groups G² 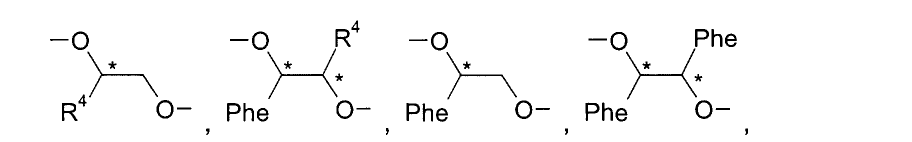 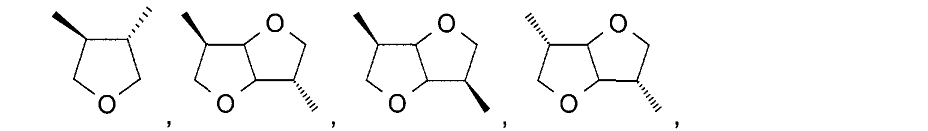 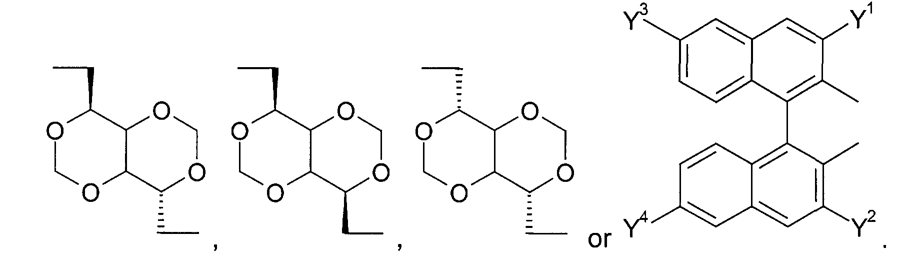 wherein Phe has the meaning given above, R⁴ is F or optionally fluorinated alkyl with 1 to 4 C atoms and Y¹, Y², Y³ and Y⁴ have one of the meanings of R¹ in formula I.

Preferably G² is dianhydrosorbitol, substituted ethane diol like 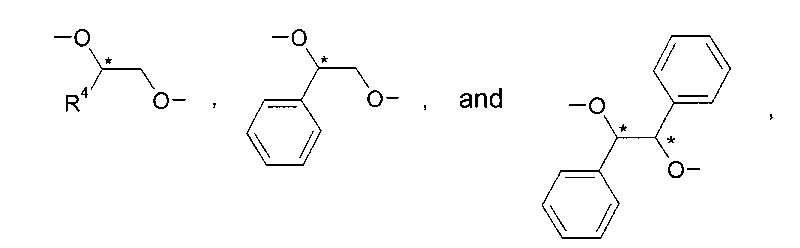 wherein R⁴ is F, CH₃ or CF₃,
or optionally substituted binaphthyl 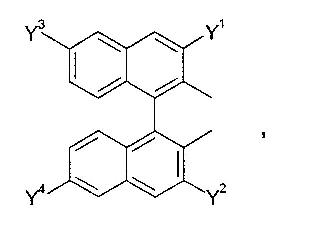 wherein Y¹, Y², Y³ and Y⁴ are H, F or optionally fluorinated alkyl with 1 to 8 C atoms.

Preferably -(A¹-Z)ₐ- and -(Z-A²)_{b}- in formula II1* and II2* are selected of the above disclosed preferred formulae II-1 to II-25 and IIa to IIo, most preferably of formulae II1 to II6 and IIa to IIf.

If R in formula I is an alkyl or alkoxy radical, i.e. where the terminal CH₂ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Especially preferably R is straight chain alkyl or alkoxy with 1 to 8 C atoms.

Oxaalkyl, i.e. where one CH₂ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

Halogen is preferably F or Cl.

R in formula I can be a polar or a non-polar group. In case of a polar group, R is selected from CN, NO₂, halogen, OCH₃, OCN, SCN, COR⁵, COOR⁵ or a mono- oligo- or polyfluorinated alkyl or alkoxy group with 1 to 4 C atoms. R⁵ is optionally fluorinated alkyl with 1 to 4, preferably 1 to 3 C atoms. Especially preferably polar groups R are selected of F, Cl, CN, NO₂, OCH₃, COCH₃, COC₂H₅, COOCH₃, COOC₂H₅, CF₃, C₂F₅, OCF₃, OCHF₂, and OC₂F₅, in particular of F, Cl, CN, OCH₃ and OCF₃.

In case of a non-polar group, R is preferably alkyl with up to 15 C atoms or alkoxy with 2 to 15 C atoms.

R in formula I can be an achiral or a chiral group. In case of a chiral group it is preferably selected according to the following formula III: 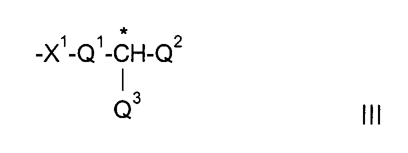 wherein
- X¹: is -O-, -S-, -CO-, -COO-, -OCO-, -OCOO- or a single bond,
- Q¹: is an alkylene or alkylene-oxy group with 1 to 9 C atoms or a single bond,
- Q²: is an alkyl or alkoxy group with 1 to 10 C atoms which may be unsubstituted, mono- or polysubstituted by halogen or CN, it being also possible for one or more non-adjacent CH₂ groups to be replaced, in each case independently from one another, by -C≡C-, -O-, -S-, -NH-, -N(CH₃)-, -CO-, -COO-, -OCO-, -OCO-O-, -S-CO- or -CO-S- in such a manner that oxygen atoms are not linked directly to one another,
- Q³: is halogen, a cyano group or an alkyl or alkoxy group with 1 to 4 C atoms different from Q².

In case Q¹ in formula III is an alkylene-oxy group, the O atom is preferably adjacent to the chiral C atom.

Preferred chiral groups R are 2-alkyl, 2-alkoxy, 2-methylalkyl, 2-methylalkoxy, 2-fluoroalkyl, 2-fluoroalkoxy, 2-(2-ethin)-alkyl, 2-(2-ethin)-alkoxy, 1,1,1-trifluoro-2-alkyl and 1,1,1-trifluoro-2-alkoxy.

Particularly preferred chiral groups R are 2-butyl (=1-methylpropyl), 2-methylbutyl, 2-methylpentyl, 3-methylpentyl, 2-ethylhexyl, 2-propylpentyl, in particular 2-methylbutyl, 2-methylbutoxy, 2-methylpentoxy, 3-methylpentoxy, 2-ethylhexoxy, 1-methylhexoxy, 2-octyloxy, 2-oxa-3-methylbutyl, 3-oxa-4-methylpentyl, 4-methylhexyl, 2-hexyl, 2-octyl, 2-nonyl, 2-decyl, 2-dodecyl, 6-methoxyoctoxy, 6-methyloctoxy, 6-methyloctanoyloxy, 5-methylheptyloxycarbonyl, 2-methylbutyryloxy, 3-methylvaleroyloxy, 4-methylhexanoyloxy, 2-chlorpropionyloxy, 2-chloro-3-methylbutyryloxy, 2-chloro-4-methylvaleryloxy, 2-chloro-3-methylvaleryloxy, 2-methyl-3-oxapentyl, 2-methyl-3-oxahexyl, 1-methoxypropyl-2-oxy, 1-ethoxypropyl-2-oxy, 1-propoxypropyl-2-oxy, 1-butoxypropyl-2-oxy, 2-fluorooctyloxy, 2-fluorodecyloxy, 1,1,1-trifluoro-2-octyloxy, 1,1,1-trifluoro-2-octyl, 2-fluoromethyloctyloxy for example. Very preferred are 2-hexyl, 2-octyl, 2-octyloxy, 1,1,1-trifluoro-2-hexyl, 1,1,1-trifluoro-2-octyl and 1,1,1-trifluoro-2-octyloxy, for example.

In addition, compounds of formula I containing an achiral branched group R may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methylpropoxy and 3-methylbutoxy.

Another preferred embodiment of the present invention relates to compounds of formula I wherein R is denoting P-(Sp-X)ₙ-.

The polymerisable group P is preferably selected from CH₂=CW¹-COO-, 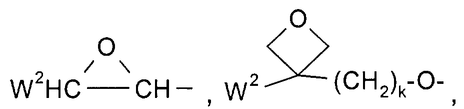 CH₂=CW²-O-, CH₃-CH=CH-O-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, Phe-CH=CH-, HOOC-, OCN- and W⁴W⁵W⁶Si-, with W¹ being H, Cl, CN, phenyl or alkyl with 1 to 5 C-atoms, in particular H, Cl or CH₃, W² and W³ being independently of each other H or alkyl with 1 to 5 C-atoms, in particular methyl, ethyl or n-propyl, W⁴, W⁵ and W⁶ being independently of each other Cl, oxaalkyl or oxacarbonylalkyl with 1 to 5 C-atoms, and k₁ and k₂ being independently of each other 0 or 1.

P is particularly preferably acrylate, methacrylate, vinyl, vinyloxy, epoxy, styrene or a propenyl ether group, in particular acrylate, methacrylate, vinyl or epoxy.

As for the spacer group Sp all groups can be used that are known for this purpose to the skilled in the art. The spacer group Sp is preferably a linear or branched alkylene group having 1 to 20 C atoms, in particular 1 to 12 C atoms, in which, in addition, one or more non-adjacent CH₂ groups may be replaced by -O-, -S-, -NH-, -N(CH₃)-, -CO-, -O-CO-, -S-CO-, -O-COO-, -CO-S-, -CO-O-, -CH(halogen)-, -CH(CN)-, -CH=CH- or -C≡C-.

Typical spacer groups are for example -(CH₂)ₒ-, -(CH₂CH₂O)ₚ-CH₂CH₂-, -CH₂CH₂-S-CH₂CH₂- or-CH₂CH₂-NH-CH₂CH₂-,with o being an integer from 2 to 12 and p being an integer from 1 to 3.

Preferred spacer groups are ethylene, propylene, butylene, pentylene, hexylene, heptylene, octylene, nonylene, decylene, undecylene, dodecylene, octadecylene, ethyleneoxyethylene, methyleneoxybutylene, ethylene-thioethylene, ethylene-N-methyliminoethylene, 1-methylalkylene, ethenylene, propenylene and butenylene for example.

Especially preferred are inventive compounds of formula I wherein Sp is denoting an alkyl or alkoxy group with 2 to 8 C atoms. Straight-chain alkyl or alkoxy groups are especially preferred.

In another preferred embodiment of the invention the chiral compounds of formula I comprise at least one spacer group Sp that is a chiral group of the formula IV: 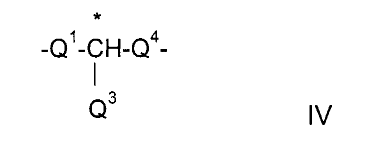 wherein
Q¹ and Q³ have the meanings given in formula III, and
Q⁴ is an alkylene or alkylene-oxy group with 1 to 10 C atoms or a single bond, being different from Q¹.

In case Q¹ in formula III is an alkylene-oxy group, the O atom is preferably adjacent to the chiral C atom.

In the event that R is denoting P-Sp-X-, the two spacer groups Sp in the compounds of formula I may be identical or different.

Of the preferred compounds described above particularly preferred are those wherein n is 1.

Further preferred are compounds comprising both a group P-(Sp-X)ₙ- wherein n is 0 and a group P-(Sp-X)ₙ- wherein n is 1.

Preferred compounds of formula I are the following 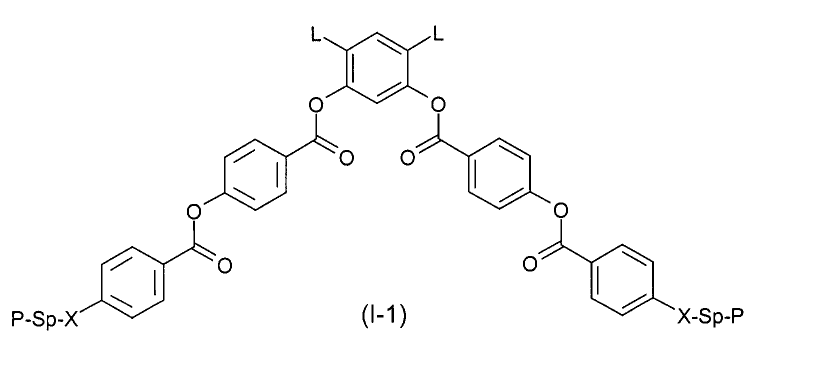 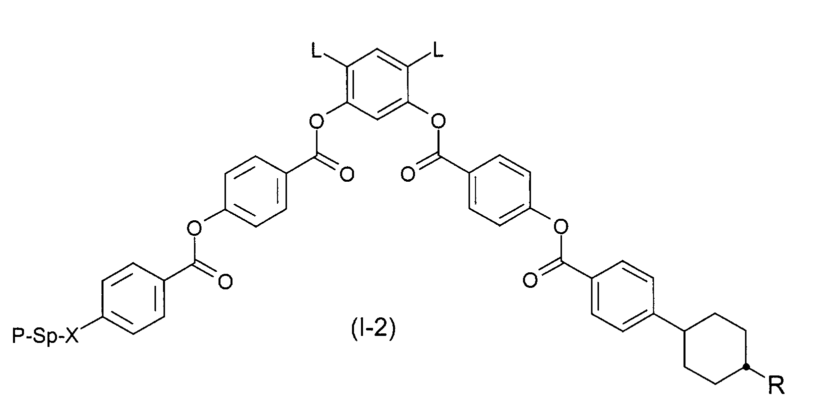 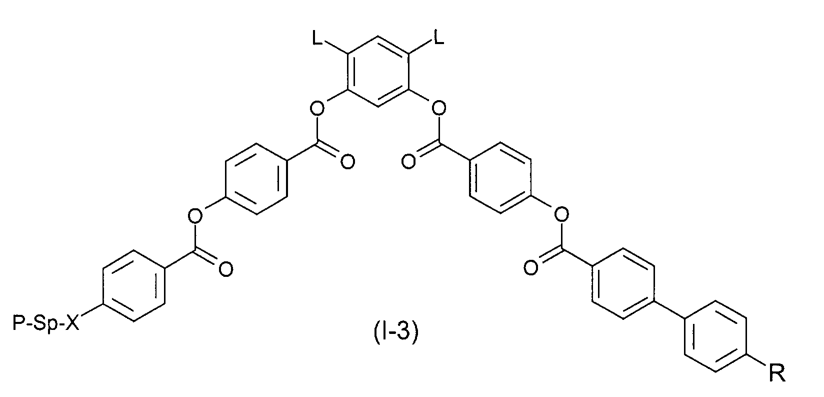 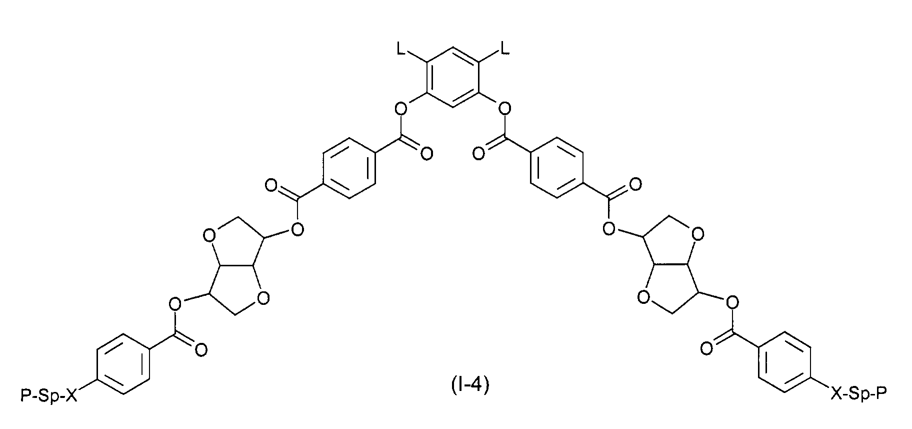 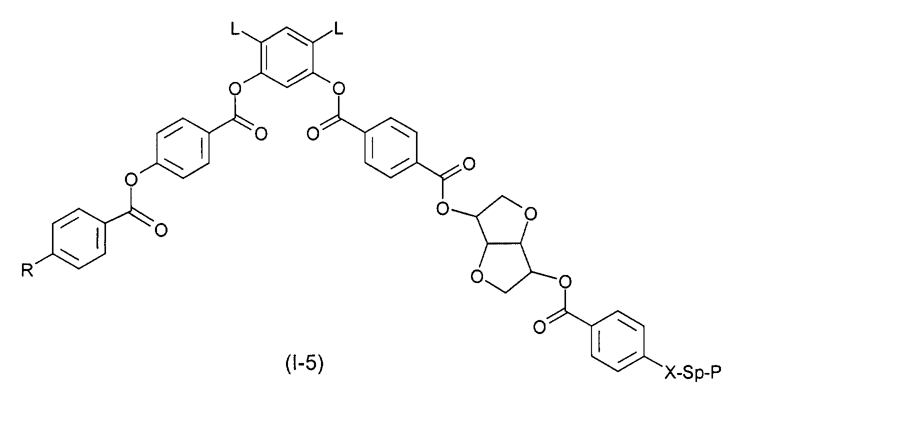 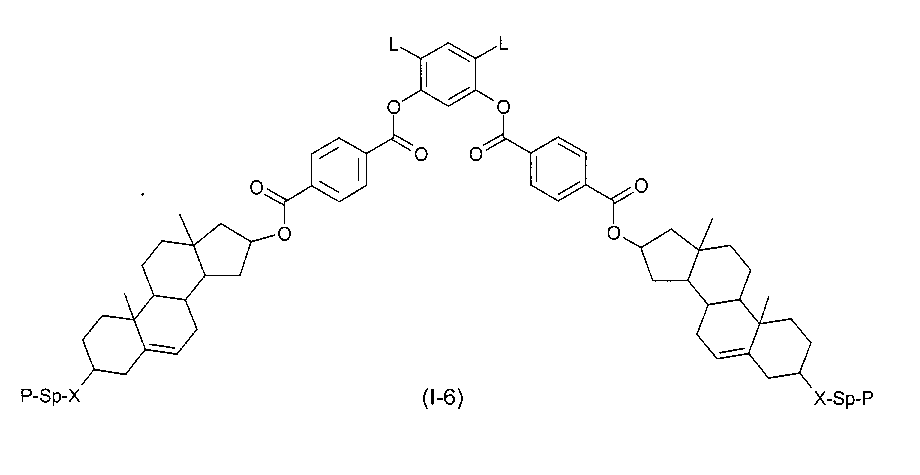 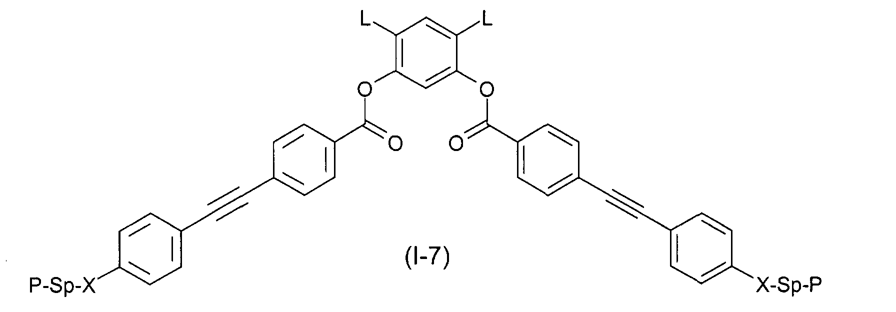 wherein P, Sp, X, L and R have the meanings given above.

Especially preferred are compounds of the above formulae, wherein L is CN, Cl, F, CF₃ or OCF₃, R is straight chain or branched alkyl or alkoxy with 1 to 15 C atoms and P, Sp and X have one of the meanings of formula I.

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. Some specific methods of preparation can be taken from the examples.

In particular, the inventive compounds can be prepared according to or in analogy to the following reaction schemes (L = alkyl, halogen, CN, alkoxy, thioalkyl, R = as defined in formula I, preferably halogen, alkyl, alkoxy)

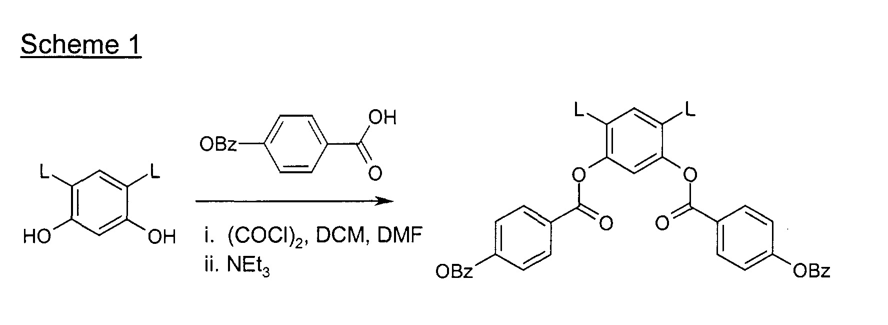

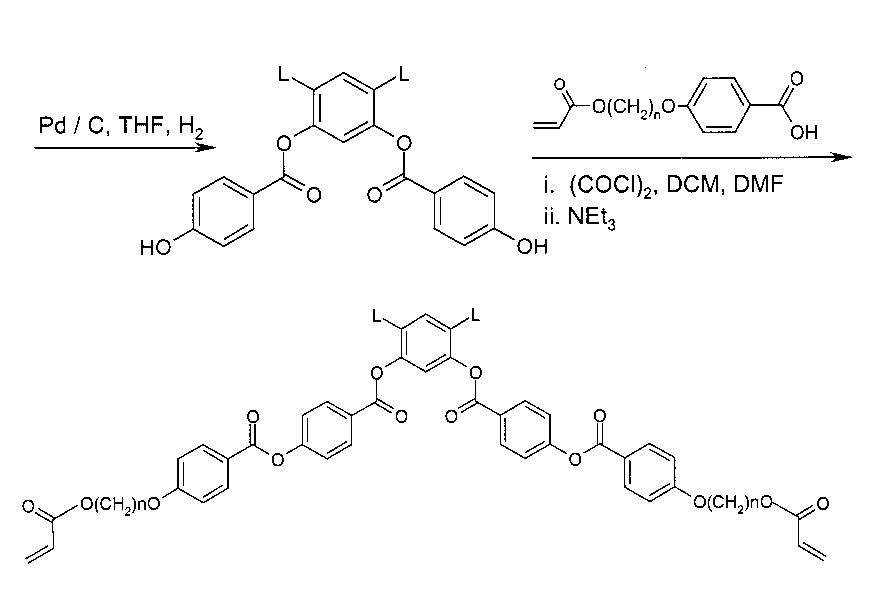

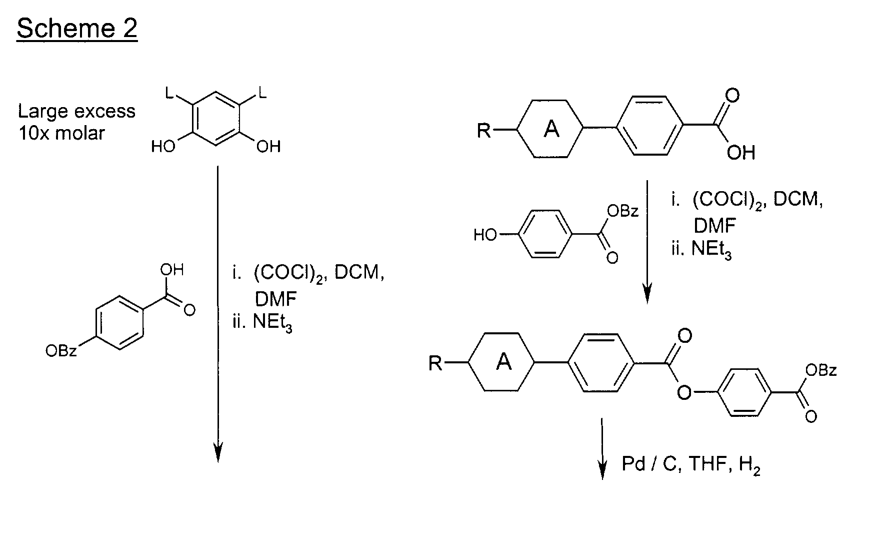

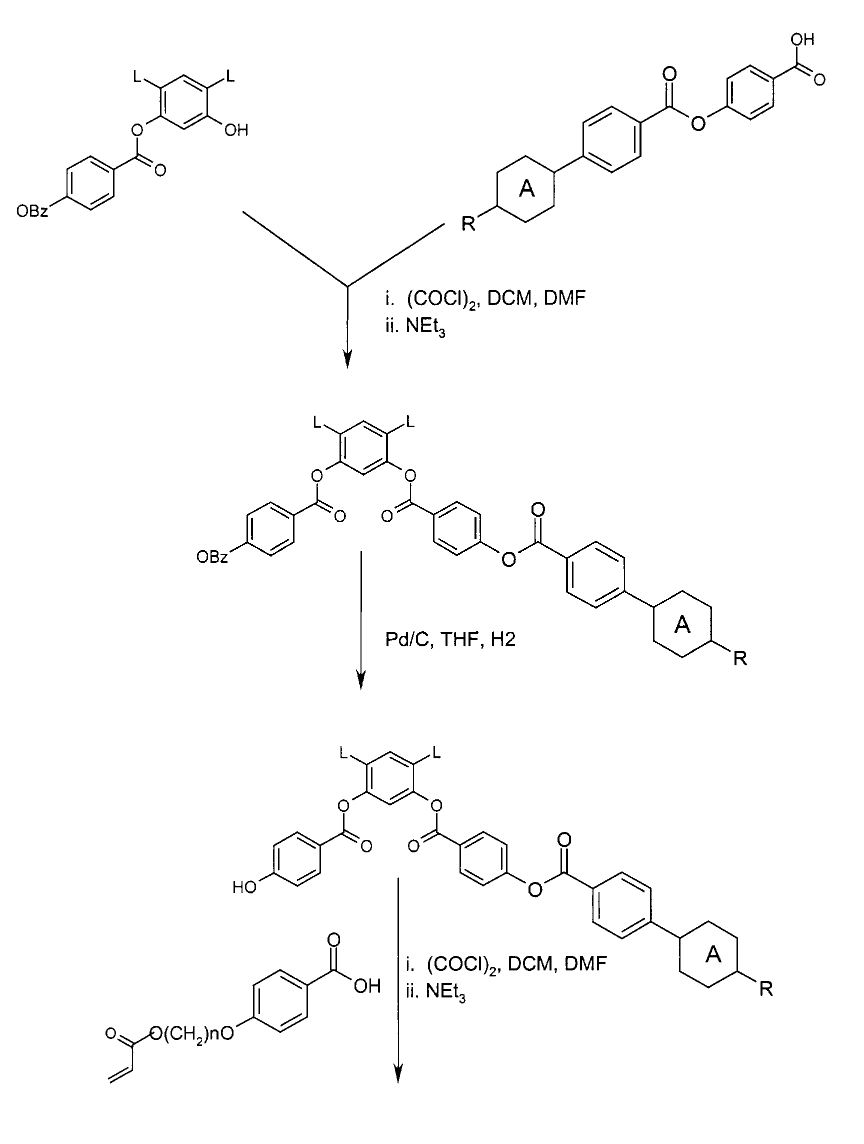

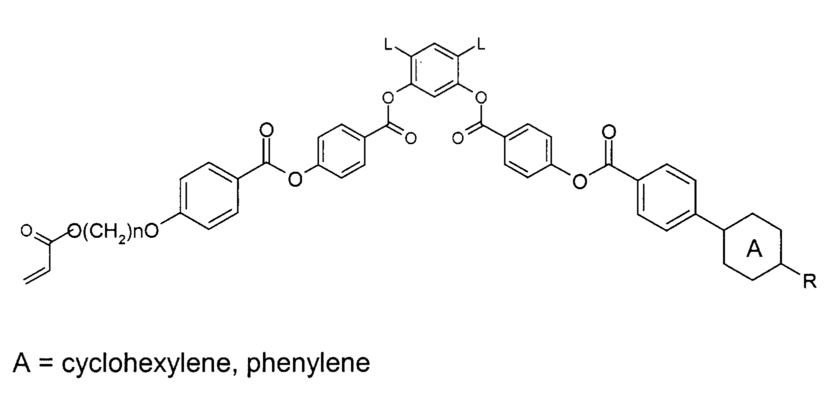

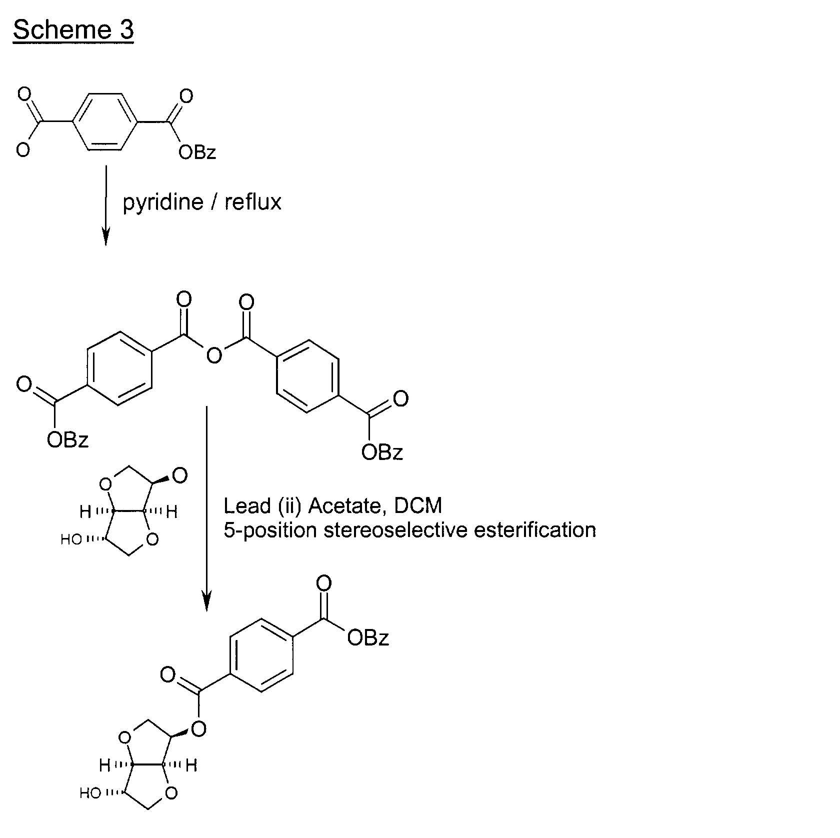

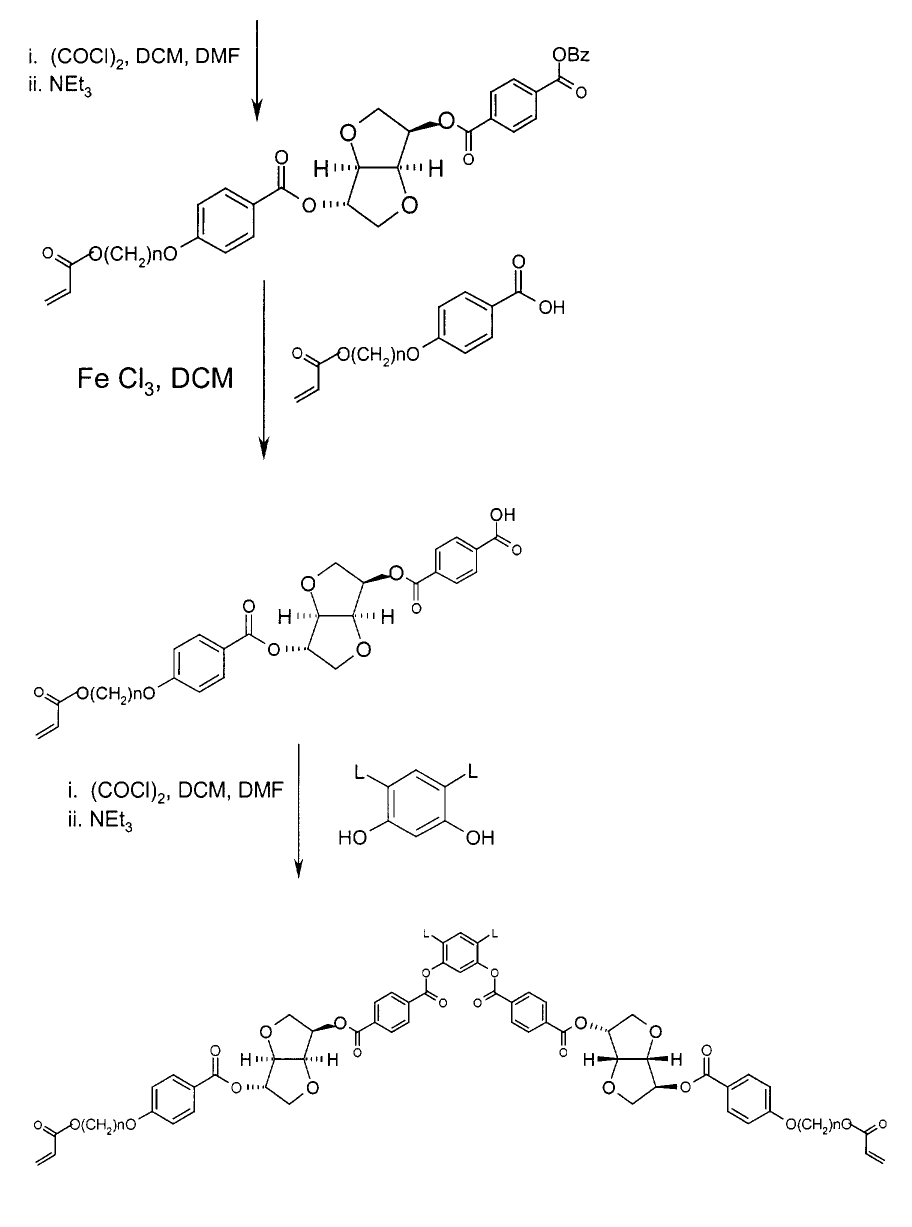

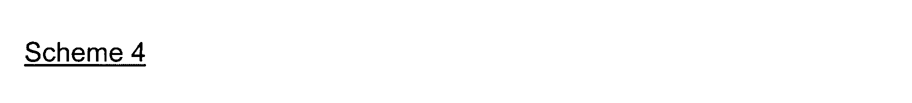

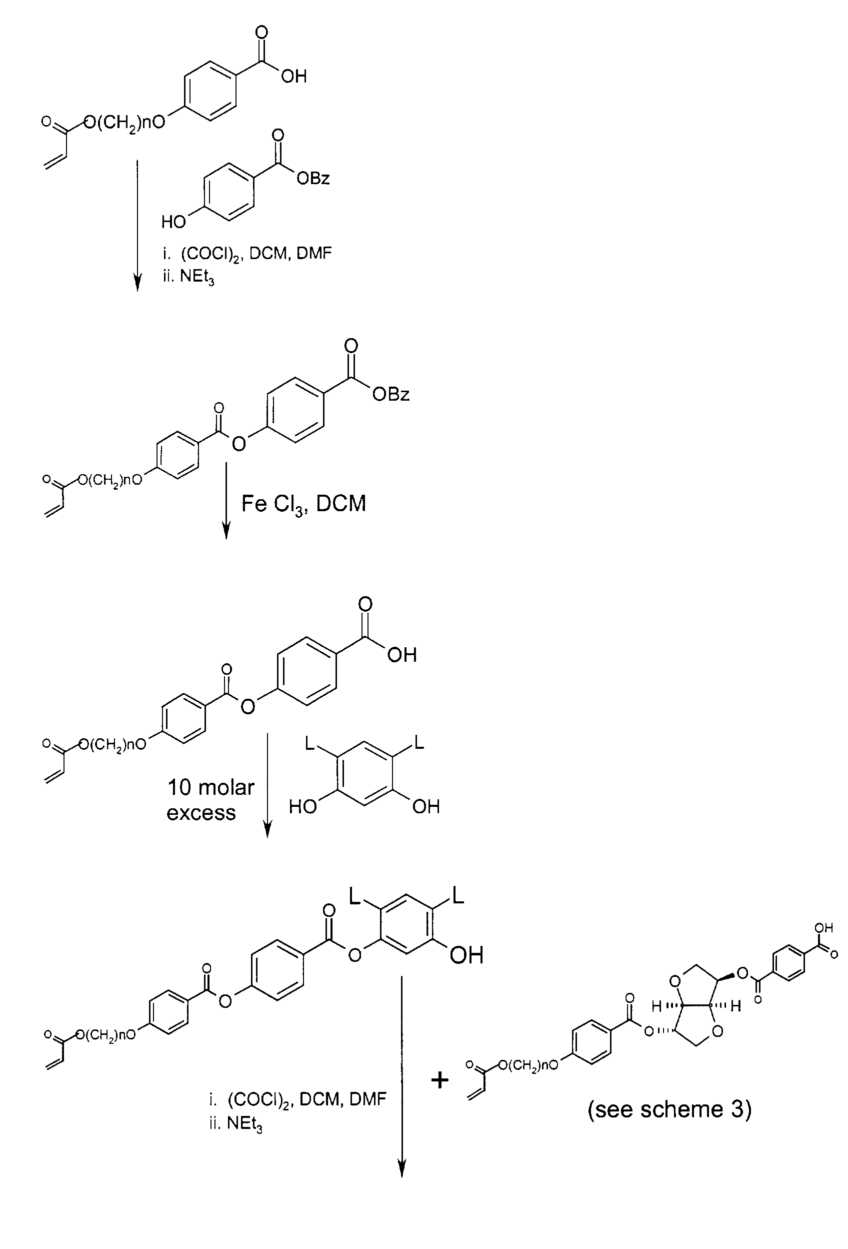

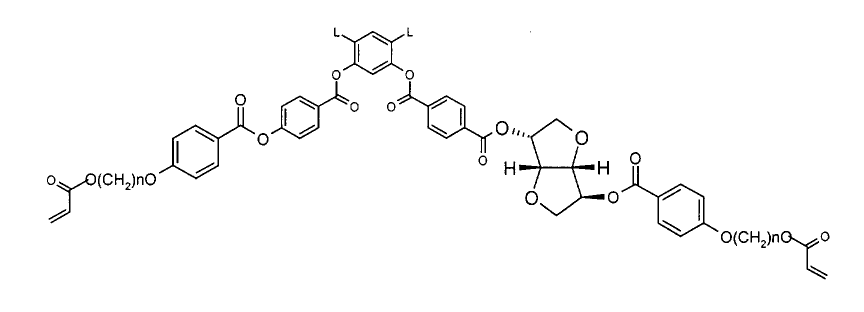

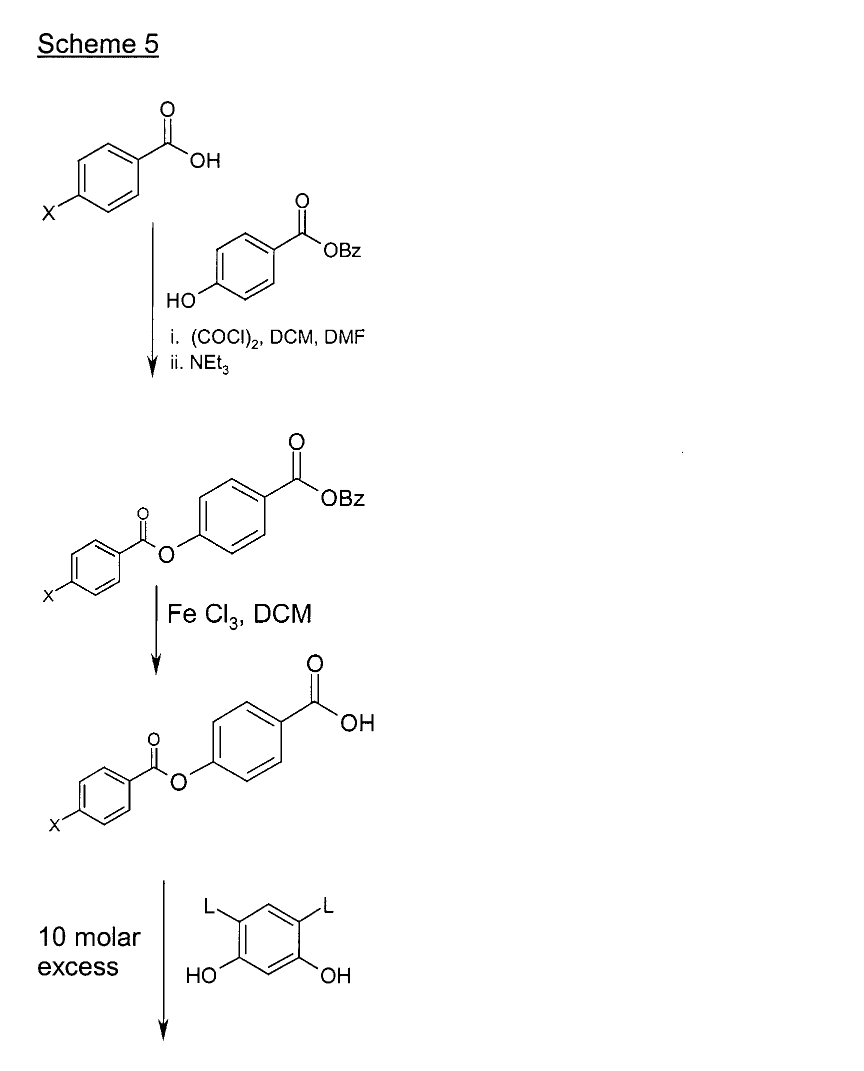

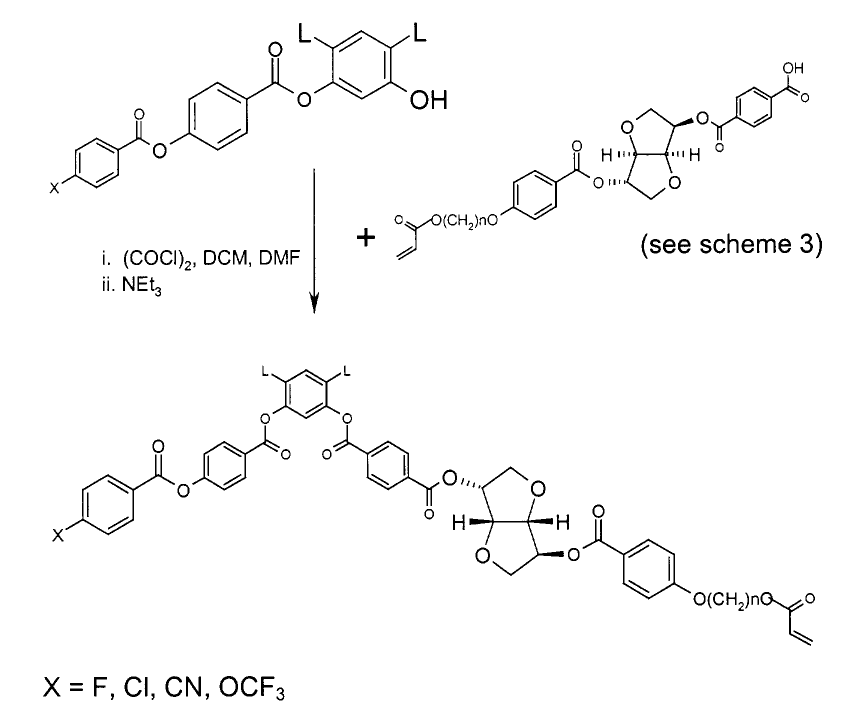

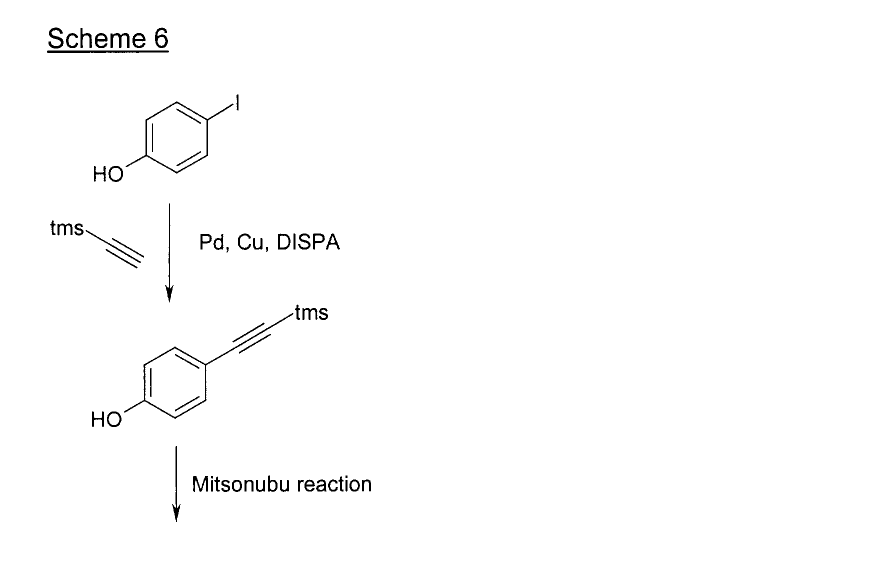

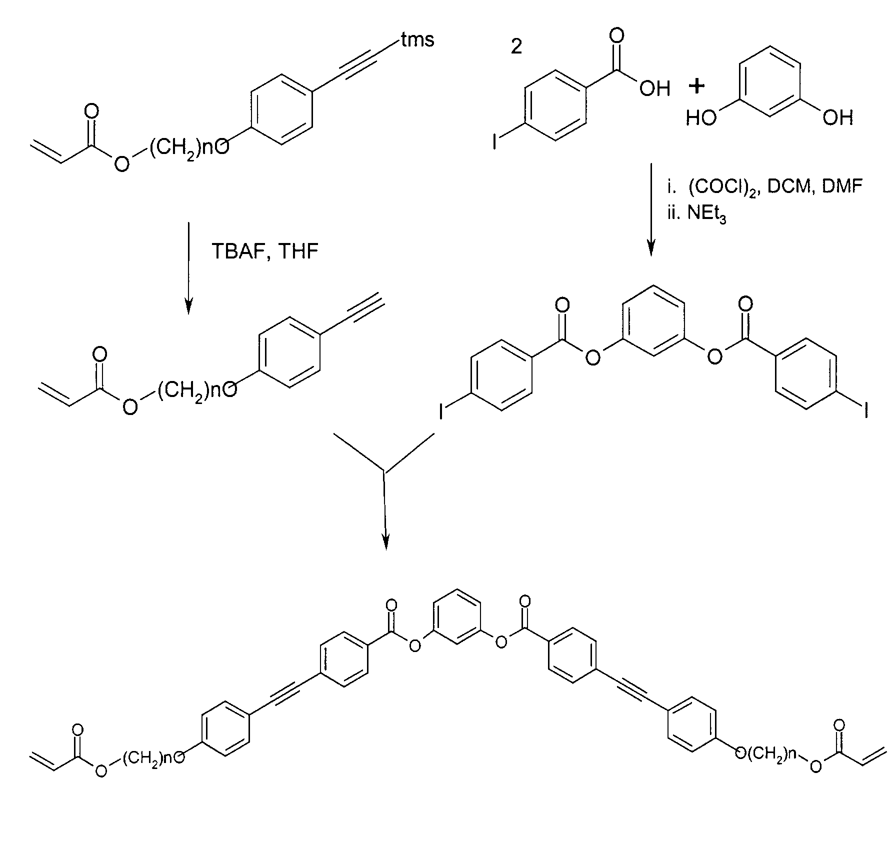

The compounds of formula I and the liquid crystalline media comprising them can be used in liquid crystal displays, such as STN, TN, AMD-TN, temperature compensation, guest-host, phase change or surface stabilized or polymer stabilized cholesteric texture (SSCT, PSCT) displays, in particular in ferroelectric, antiferroelectric or flexoelectric devices, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

The inventive chiral compounds can also be used in a liquid crystal medium for liquid crystal displays like, for example, supertwisted or active matrix displays, ferroelectric, antiferroelectric or flexoelectric displays or cholesteric displays.

The inventive compounds can also be used for the preparation of anisotropic polymers or polymer gels. Anisotropic polymers can be prepared by polymerizing one or more inventive compounds, optionally together with other comonomers, for example by polymerization in solution or in bulk according to known methods.

Preferably a compound of formula I is polymerized in a mixture together with further compounds of formula I or other compounds having at least one polymerizable group.

Particularly preferably an inventive compound or mixture is coated onto a substrate, aligned into uniform orientation and polymerized in situ for example by means of heat or actinic radiation. Thereby the uniform orientation of the coated material is permanently fixed. In particular when using compounds or mixtures with more than one polymerizable groups, crosslinked anisotropic polymers with high mechanical and thermal stability can be obtained.

A detailed description of the in situ polymerization of aligned polymerizable mesogenic materials is given in D.J.Broer et al., Makromolekulare Chemie 190, 2255 (1989).

Examples of suitable polymerizable mesogenic compounds that can be used as co-components together with the inventive compounds in the polymerizable mixture are disclosed for example in WO 93/22397; EP 0,261,712; DE 195,04,224; WO 95/22586 and WO 97/00600. The compounds disclosed in these documents, however, are to be regarded merely as examples that shall not limit the scope of this invention.

Preferably the polymerizable CLC mixture comprises at least one polymerizable mesogenic compound having one polymerizable functional group and at least one polymerizable mesogenic compound having two or more polymerizable functional groups.

Examples of especially useful monoreactive chiral and achiral polymerizable mesogenic compounds are shown in the following list of compounds, which should, however, be taken only as illustrative and is in no way intended to restrict, but instead to explain the present invention:

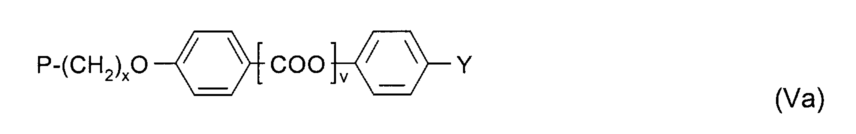

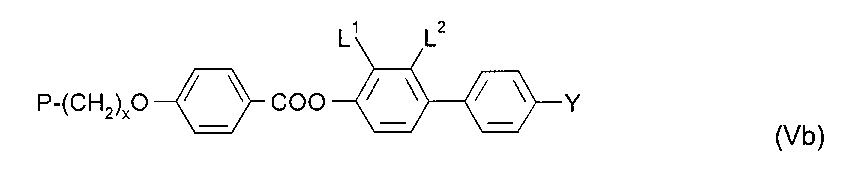

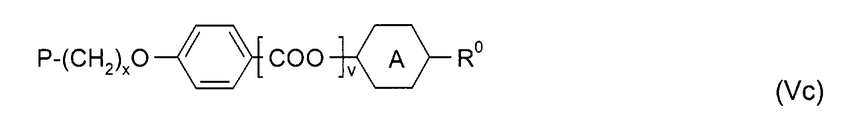

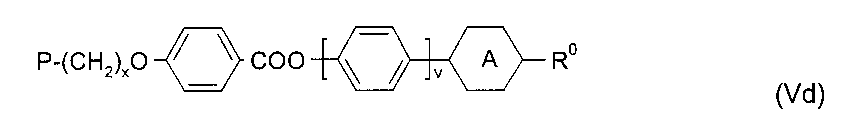

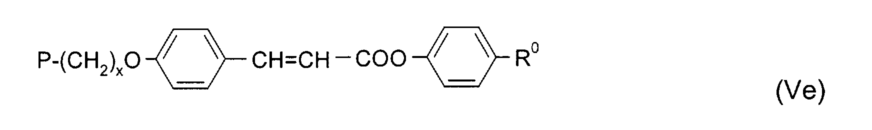

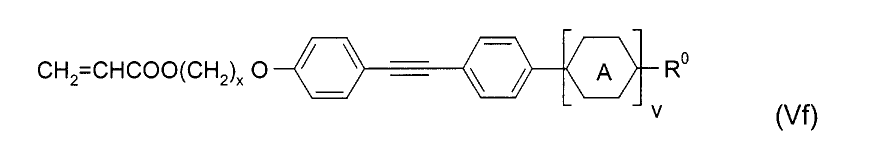

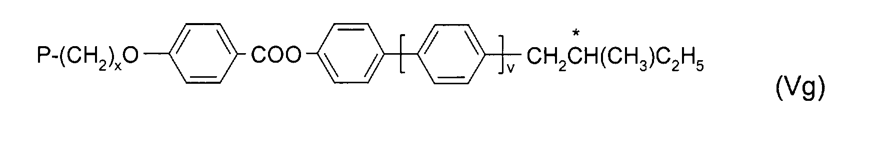

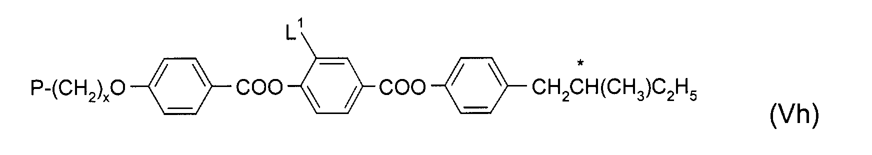

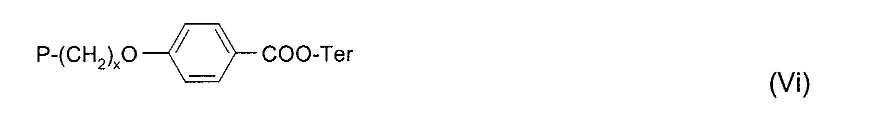

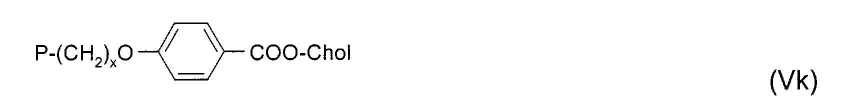

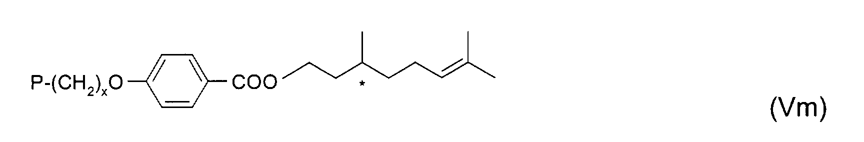

Examples of useful direactive chiral and achiral polymerizable mesogenic compounds are shown in the following list of compounds, which should, however, be taken only as illustrative and is in no way intended to restrict, but instead to explain the present invention

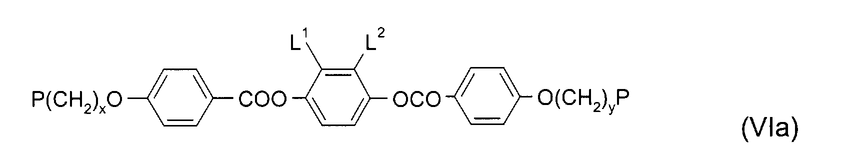

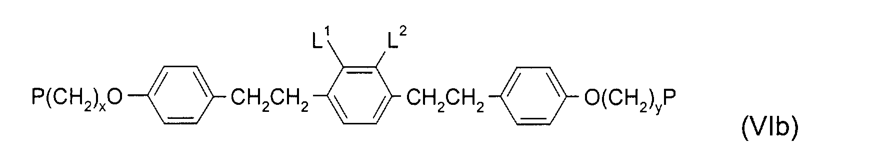

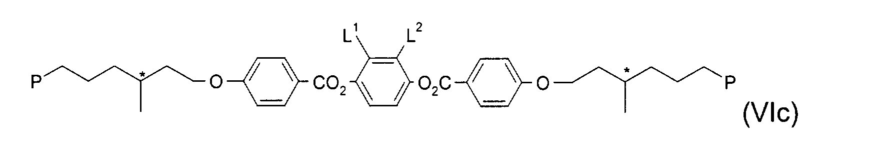

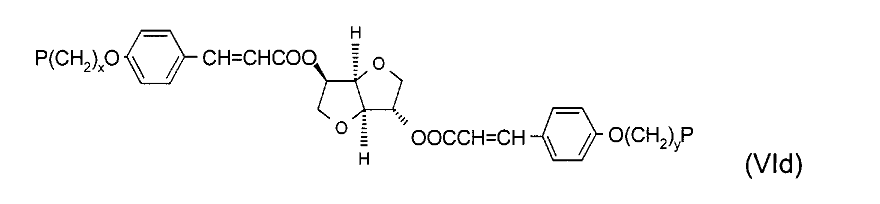

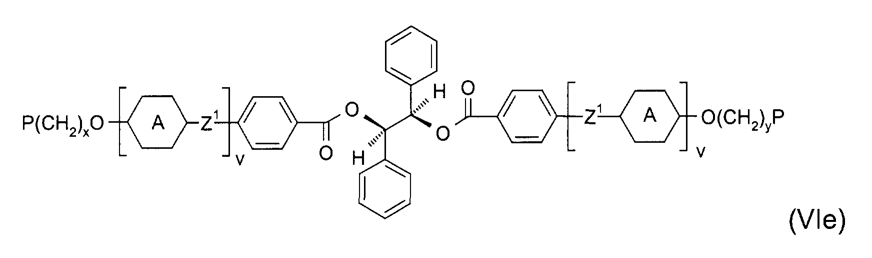

In the above formulae, P has one of the meanings of formula I and its preferred meanings as mentioned above, x and y are identical or different integers from 1 to 12 , A is 1,4-phenylene that is unsubstituted or substituted in 2-, 3- and/or 5-position by L¹ or denotes 1,4-cyclohexylene, Z¹ has one of the meanings of formula II, v is 0 or 1, Y is a polar group as defined for R above, R⁰ is a non-polar alkyl or alkoxy group, Ter is a terpenoid radical like e.g. menthyl, Chol is a cholesteryl group, L¹ and L² are each independently H, F, Cl, CN, OH, NO₂ or an optionally halogenated alkyl, alkoxy or carbonyl group with 1 to 4 C atoms, and the 1,4-phenylene rings in the above formulae may also be substituted in 2-, 3- and/or 5-position by L¹.

The term non-polar group in this connection preferably denotes an alkyl group with 1 or more, preferably 1 to 15 C atoms or an alkoxy group with 2 or more, preferably 2 to 15 C atoms.

The mono- and difunctional polymerizable mesogenic compounds of above formulae V and VI can be prepared by methods which are known per se and which are described in the documents cited above and, for example, in standard works of organic chemistry such as, for example, Houben-Weyl, Methoden der organischen Chemie, Thieme-Verlag, Stuttgart.

In a preferred embodiment of the invention the polymerizable liquid crystalline mixtures comprise at least one inventive chiral compound, at least one monofunctional compound of formulae Va-Vm and at least one bifunctional polymerizable compound of formulae Vla-Vle.

In another preferred embodiment the polymerizable liquid crystalline mixtures comprise at least one inventive chiral compound and at least two monofunctional compounds of formulae Va-Vm.

Another object of the invention is an anisotropic polymer film with an oriented chiral liquid crystalline phase obtainable by (co)polymerizing a liquid crystalline mixture comprising at least one chiral compound of formula I and at least one polymerizable mesogenic compound preferably selected of formula Va-Vm and VIa-VIe and/or at least one polymerizable chiral compound of formula I.

To prepare anisotropic polymer film with a chiral liquid crystalline phase with uniform orientation the inventive liquid crystalline mixtures, for example, are coated onto a substrate, aligned and polymerized in situ by exposing them to heat or actinic radiation. Alignment and curing are preferably carried out in the liquid crystalline phase of the liquid crystalline mixtures.

Actinic radiation means irradiation with light, like UV light, IR light or visible light, irradiation with X-rays or gamma rays or irradiation with high energy particles, such as ions or electrons. As a source for actinic radiation for example a single UV lamp or a set of UV lamps can be used. Another possible source for actinic radiation is a laser, like e.g. a UV laser, an IR laser or a visible laser.

For example, when polymerizing by means of UV light, a photoinitiator can be used that decomposes under UV irradiation to produce free radicals or ions that start the polymerization reaction.

It is also possible to use a cationic photoinitiator, when curing reactive mesogens with for example vinyl and epoxide reactive groups, that photocures with cations instead of free radicals.

As a photoinitiator for radical polymerization for example the commercially available Irgacure 651, Irgacure 184, Darocure 1173 or Darocure 4205 (all from Ciba Geigy AG) can be used, whereas in case of cationic photopolymerization the commercially available UVI 6974 (Union Carbide) can be used.

Preferably the polymerizable liquid crystalline mixtures comprise 0.01 to 10 %, in particular 0.05 to 8 %, very preferably 0.1 to 5 % by weight of a photoinitiator, especially preferably a UV-photoinitiator.

In a preferred embodiment of the invention the polymerization of the polymerizable mesogenic material is carried out under an atmosphere of inert gas, preferably under a nitrogen atmosphere.

As a substrate for example a glass or quarz sheet as well as a plastic film or sheet can be used. It is also possible to put a second substrate on top of the coated mixture prior to, during and/or after polymerization. The substrates can be removed after polymerization or not. When using two substrates in case of curing by actinic radiation, at least one substrate has to be transmissive for the actinic radiation used for the polymerization.

Isotropic or birefringent substrates can be used. In case the substrate is not removed from the polymerized film after polymerization, preferably isotropic substrates are used.

Preferably at least one substrate is a plastic substrate such as for example a film of polyester such as polyethyleneterephthalate (PET), of polyvinylalcohol (PVA), polycarbonate (PC) or triacetylcellulose (TAC), especially preferably a PET film or a TAC film. As a birefringent substrate for example an uniaxially stretched plastic film can be used. For example PET films are commercially available from ICI Corp. under the trade name Melinex.

In a preferred embodiment of the present invention, the polymerizable mixture is coated as a thin layer on a substrate or between substrate, and is preferably aligned in its mesophase to give uniform orientation.

Uniform orientation can be achieved for example by shearing the mixture, e.g. by means of a doctor blade. It is also possible to apply an alignment layer, for example a layer of rubbed polyimide or sputtered SiOₓ, on top of at least one of the substrates.

In another preferred embodiment, a second substrate is put on top of the coated material. In this case, the shearing caused by putting together the two substrates is sufficient to give good alignment.

It is also possible to apply an electric or magnetic field to the coated mixture.

In some cases it is of advantage to apply a second substrate not only to aid alignment of the polymerizable mixture but also to exclude oxygen that may inhibit the polymerization. Alternatively the curing can be carried out under an atmosphere of inert gas. However, curing in air is also possible using suitable photoinitiators and high lamp power. When using a cationic photoinitiator oxygen exclusion most often is not needed, but water should be excluded.

A detailed description of the in situ polymerization of polymerizable mesogenic compounds can be found in D.J.Broer et al., Makromolekulare Chemie 190, 2255 (1989).

A polymerizable liquid crystalline mixture for the preparation of anisotropic polymer films comprises preferably 0.1 to 35 %, in particular 0.5 to 15 % and very particularly preferably 0.5 to 5 % by weight of one or more polymerizable chiral compounds of formula I.

Polymerizable liquid crystalline mixtures are preferred that comprise 1 to 3 chiral compounds of formula I.

The inventive polymerizable liquid crystalline mixtures can additionally comprise one or more other suitable components, such as, for example, catalysts, sensitizers, stabilizers, co-reacting monomers or surface-active compounds.

In a preferred embodiment of the invention, the inventive polymerizable liquid crystalline mixture comprises a stabilizer that is used to prevent undesired spontaneous polymerization for example during storage of the composition. As stabilizers in principal all compounds can be used that are known to the skilled in the art for this purpose. These compounds are commercially available in a broad variety. Typical examples for stabilizers are 4-ethoxyphenol or butylated hydroxytoluene (BHT).

It is also possible, in order to increase crosslinking of the polymers, to add up to 20% of a non mesogenic compound with two or more polymerizable functional groups to the polymerizable composition alternatively or additionally to the multifunctional polymerizable mesogenic compounds.

Typical examples for difunctional non mesogenic monomers are alkyldiacrylates or alkyldimethacrylates with alkyl groups of 1 to 20 C atoms. Typical examples for non mesogenic monomers with more than two polymerizable groups are trimethylpropanetrimethacrylate or pentaerythritoltetraacrylate.

Polymerization of inventive compositions comprising compounds with only one polymerizable functional group leads to linear polymers, whereas in the presence of compounds with more than one polymerizable functional group crosslinked polymers are obtained.

For the preparation of anisotropic polymer gels, the liquid crystalline mixtures can be polymerized in situ as described above, however, in this case alignment of the polymerizable mixture is not necessary.

The inventive compounds, polymers and polymer films can be used in liquid crystal displays, such as STN, TN, AMD-TN, temperature compensation, ferroelectric, antiferroelectric, flexoelectric, guest-host, phase change or surface stabilized or polymer stabilized cholesteric texture (SSCT, PSCT) displays, in active and passive optical elements like polarizers, compensators, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

## Claims

1. Polymerizable mesogenic compound of formula I
P-(Sp-X)ₙ-M¹-Y¹-B-Y²-M²-R I
wherein
P is a polymerizable group,
Sp is a spacer group,
X, Y¹ and Y² are in each case independently -O-, -S-, -CO-, -COO-, -OCO-, -OCO-O-, -CO-NR⁰-, -NR⁰-CO-, -OCH₂-, -CH₂O-, -SCH₂-, -CH₂S-, -CH=CH-COO-, -OOC-CH=CH- or a single bond,
R⁰ is H or alkyl with 1 to 4 C atoms,
n is 0 or 1,
M¹ and M² are independently of each other a mesogenic group,
B is a bivalent ring group that imparts a bent structure to the compound,
R is H, F, Cl, CN, OCN, SCN, SF₅,NO₂ or a straight-chain or branched alkyl radical with up to 25 C atoms which may be unsubstituted, mono- or polysubstituted by halogen or CN, it being also possible for one or more non-adjacent CH₂ groups to be replaced, in each case independently from one another, by -O-, -S-, -NH-, -N(CH₃)-, -CO-, -COO-, -OCO-, -OCO-O-, -S-CO-, -CO-S-, -CH=CH- or -C≡C- in such a manner that oxygen atoms are not linked directly to one another, or alternatively R is denoting P-(Sp-X)ₙ-, with P, Sp, X and n having independently of each other one of the meanings given above,
with the proviso that if B is 1,3-phenylene, Y¹ is -COO-, Y² is -OCO-, R is P-(Sp-X)ₙ-, P is acrylate, n is 1, Sp is hexylene and X is -O-, M¹ and M² are not at the same time unsubstituted 1,4-phenylene.

2. Polymerizable mesogenic compound according to claim 1, **characterized in that** B is selected from the following groups 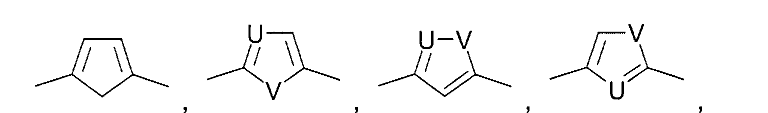 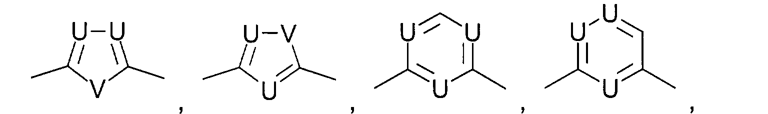 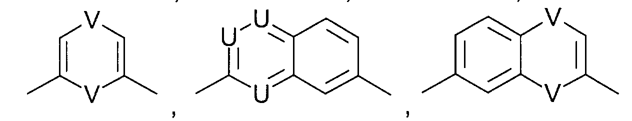 and 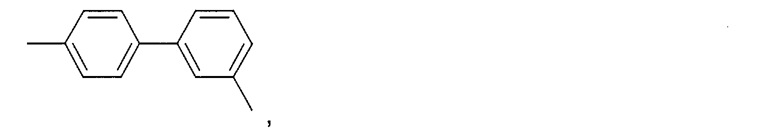 wherein
U is CR' or N,
V is CR'₂, NR', O or S,
R' is H or alkyl with 1 to 7 C atoms,
and the monocyclic five-membered groups can be substituted with 1, 2 or 3, the monocyclic six-membered groups with 1, 2, 3 or 4 and the bicyclic groups with 1, 2, 3, 4, 5 or 6 groups L, with L being in each case independently F, Cl, CN, SCN, NO₂, SF₅, alkyl, alkoxy, alkylcarbonyl or alkoxycarbonyl having 1 to 7 C atoms wherein one or more H atoms may be substituted by F or Cl.

3. Polymerizable mesogenic compound according to claim 1 or 2, **characterized in that** M¹ is selected of formula II1 and M² is selected of formula II2
-A¹-(Z-A²)ₘ₁- II1
-A¹-(Z-A²)ₘ₂- II2
wherein
Z is in each case independently -O-, -S-, -CO-, -COO-, -OCO-, -O-COO-, -CO-NR⁰-, -NR⁰-CO-, -OCH₂-, -CH₂O-, -SCH₂-, -CH₂S-, -CH₂CH₂-, -CH=CH-, -C≡C-, -CH=CH-COO-, -OCO-CH=CH- or a single bond,
R⁰ has the meaning of formula I,
A¹ and A² are each independently 1,4-phenylene in which, in addition, one or more CH groups may be replaced by N, 1,4-cyclohexylene in which, in addition, one or two non-adjacent CH₂ groups may be replaced by O and/or S, 1,4-cyclohexenylene, 1,4-bicyclo (2,2,2) octylene, piperidine-1,4-diyl, naphthalene-2,6-diyl, decahydronaphthalene-2,6-diyl, or 1,2,3,4-tetrahydronaphthalene-2,6-diyl, it being possible for all these groups to be unsubstituted, mono- or polysubstituted with F, Cl, SCN, CN, NO₂,SF₅ or optionally fluorinated alkyl, alkoxy, alkylcarbonyl or alkoxycarbonyl with 1 to 7 C atoms, and
m1 and m2 are independently of each other 0, 1, 2 or 3.

4. Polymerizable mesogenic compound according to any of claims 1 to 3, **characterized in that** M¹ and M² are selected of the following formulae and their mirror images 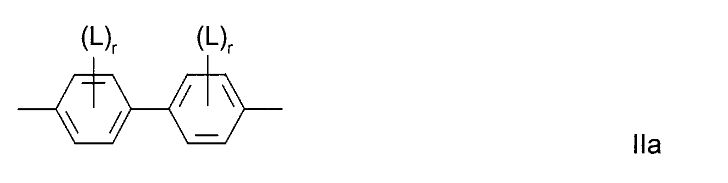 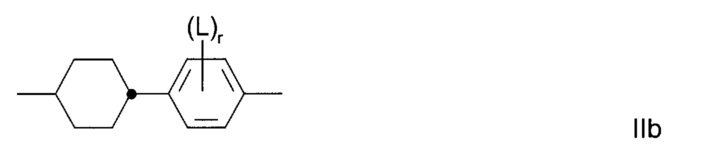 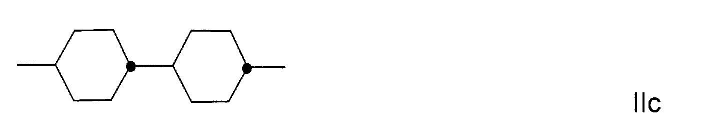 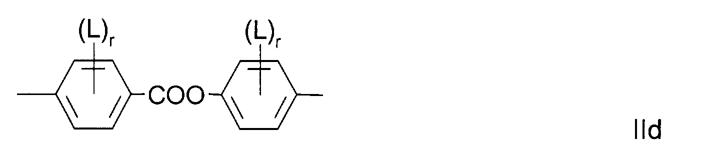 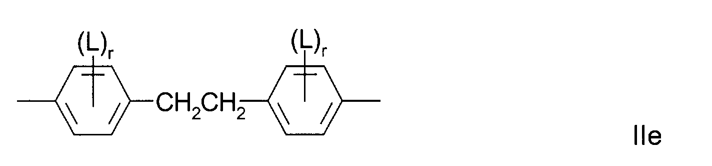 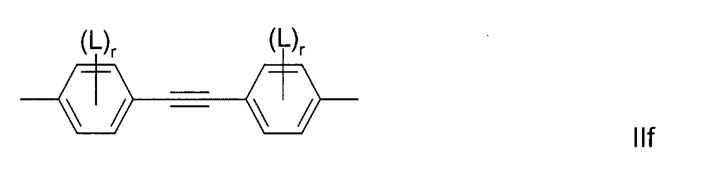 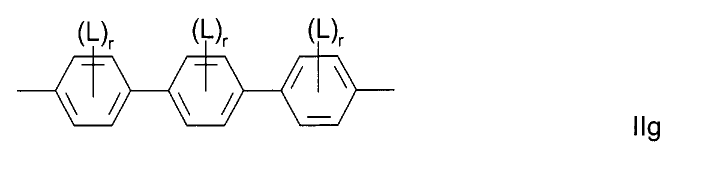 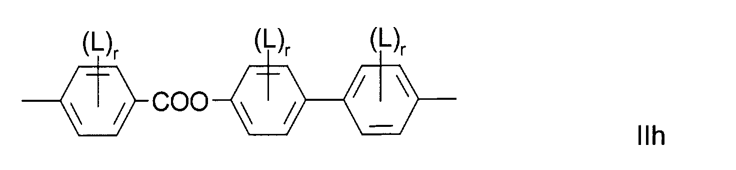 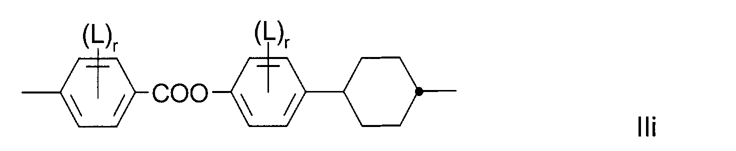 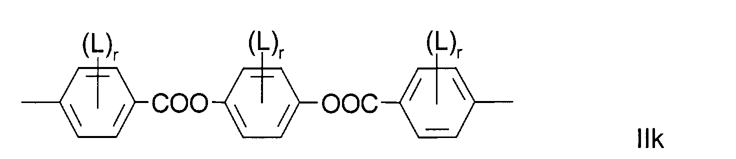 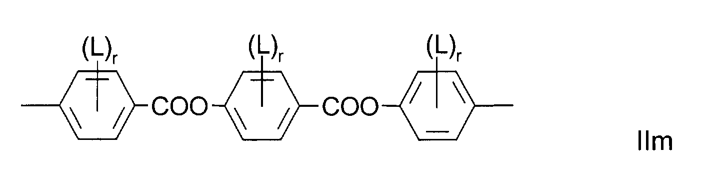 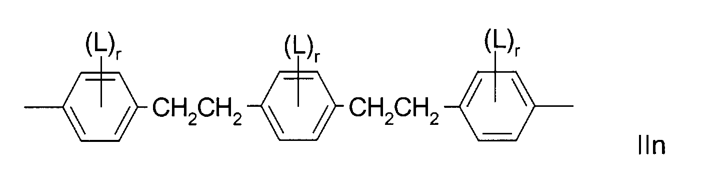 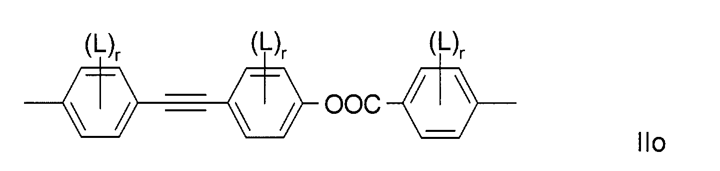 wherein L is as defined in claim 2 and r is 0, 1 or 2.

5. Polymerizable mesogenic compound according to any of claims 1 to 4, **characterized in that** R is P-(Sp-X)ₙ-.

6. Polymerizable mesogenic compound according to any of claims 1 to 4, **characterized in that** R is F, Cl, CN or an optionally halogenated alkyl, alkoxy or alkenyl group with 1 to 12 C atoms.

7. Liquid crystalline mixture comprising at least one polymerizable mesogenic compound according to any of claims 1 to 6.

8. Linear or crosslinked liquid crystalline polymer obtainable by polymerizing a mixture according to claim 7.

9. Use of a compound, mixture or polymer according to at least one of the preceding claims in liquid crystal displays, optical films, cosmetics, diagnostics, liquid crystal pigments, security applications, nonlinear optics, optical information storage or as chiral dopants.

10. A liquid crystal display comprising a liquid crystalline mixture according to claim 7.
